# EUROPÄISCHE PATENTANMELDUNG

(11) **EP 0 580 038 A2**
(43) Veröffentlichungstag der Anmeldung: **26.01.1994**
(21) Anmeldenummer: 93110998.7
(22) Anmeldetag: 09.07.1993
(51) Int. Cl.: G01N 29/20

(54) **Vorrichtung zum Messen der Ablagerungen eines Filters bzw. Siebes**

(30) Priorität: 23.07.1992 DE 4224263
(71) Anmelder: GEA Happel Klimatechnik GmbH, D-44625 Herne (DE)
(72) Erfinder: Lemanczyk, Helmut, D-4714 Selm-Bork (DE); Völkl, Karl-Heinz, D-4690 Herne 2 (DE); Müller, Detlef, D-4390 Gladbeck (DE)
(74) Vertreter: COHAUSZ HASE DAWIDOWICZ & PARTNER

(57) **Zusammenfassung**

Beschrieben wird betrifft eine Vorrichtung zum Erfassen und Überwachen des Ablagerungsgrades von Filtern und Sieben, wobei sich der Filter (2) oder das Sieb incl. der Ablagerungen innerhalb einer akustischen Übertragungsstrecke, bestehend aus Schallsender (1) und Schallempfänger (3) befindet, und der Schallempfänger an eine Messeinrichtung angeschlossen ist, um das Maß der Ablagerung aus der sich ergebenden akustischen Dämpfung aufgrund der sich bildenden Ablagerungen zu ermitteln.

## Beschreibung

Die Erfindung betrifft eine Vorrichtung zum Erfassen und Überwachen des Ablagerungsgrades von Filtern und Sieben. Ferner betrifft die Erfindung eine Vorrichtung zum Messen der Ablagerungen eines Filters oder Siebes.

Zur Ermittlung des Verschmutzungsgrades von Filtern sind verschiedene Verfahren bekannt. Bekannt sind einerseits Verfahren, die aus der Größe des sich über einem Filter bei Durchströmung mit dem zu reinigenden Medium aufbauenden Differenzdrucks aufgrund des diesem Medium entgegengerichteten Strömungswiderstandes auf den Verschmutzungsgrad dieses Filters schließen. Andererseits sind Verfahren bekannt, die die Strömungsgeschwindigkeit des den Filter durchflutenden Mediums ermitteln und aus der Reduktion der Strömungsgeschwindigkeit auf die Verschmutzung des Filters schließen.

Sowohl Differenzdruck als auch Strömungsgeschwindigkeit bzw. deren Abweichung aufgrund unterschiedlicher Filter-Verschmutzungsgrade können in verschiedener Form zur Anzeige gebracht werden:
a) Direkt auf mechanischem Wege, z.B. in Form von Manometern etc.
b) Über elektromechanische bzw. pneumatische Einrichtungen, die ein geschaltetes elektrisches bzw. pneumatisches Signal zur weiteren Auswertung abgeben.
c) Über einen elektromechanischen bzw. pneumatischen Wandler, der ein dem Verschmutzungsgrad entsprechendes analoges elektrisches bzw. pneumatisches Signal zur weiteren Auswertung abgibt.

All diesen Verfahren ist gemeinsam, daß sie nur zu einer korrekten Anzeige des Filterverschmutzungsgrades genutzt werden können, wenn das den Filter durchströmende Medium vor diesem Filter mit konstantem Vordruck ansteht.

Ändern sich hingegen die Anströmungsbedingungen, wie in der Luft bzw. Fluidtechnik üblich, aufgrund sich beispielsweise ändernder Ventilator- bzw. Pumpendrehzahlen, so geht damit - bezogen auf das eingebrachte Filtermedium - auch gleichzeitig eine Änderung des Differenzdrucks über dem Filtermedium in der o.b. Weise bzw. eine Änderung der Strömungsgeschwindigkeit des den Filter durchströmenden Mediums einher und führt bei als konstant angenommener Filterverschmutzung zu einer Änderung der Meßwerte. Damit sind diese Verfahren für den Einsatz in Luft- bzw. Flüssigkeitsstrecken mit variablen Betriebsbedingungen ungeeignet, sofern die beschriebenen Effekte nicht durch den Einsatz aufwendiger Reglungssysteme in Zusammenwirkung mit diesen Verfahren kompensiert werden.

Aufgabe der Erfindung ist es, eine Vorrichtung zum Messen der Ablagerungen eines Filters bzw. Siebes zu schaffen, deren Meßergebnisse dem Grad der Ablagerungen genau entsprechen.

Diese Aufgabe wird erfindungsgemäß dadurch gelöst, daß das zu überwachende Filter bzw. Sieb in eine akustische Übertragungsstrecke eingebracht wird und die Filter- bzw. Siebverschmutzungen aus dem Maß der akustischen Dämpfung des Übertragungssignals ermittelt wird.

Die erfindungsgemäße Vorrichtung ist von unterschiedlichen Anströmungsbedingungen des Filters aufgrund unterschiedlicher Betriebsbedingungen der luft- bzw. fluidtechnischen Anlage weitestgehend unabhängig und ermöglicht eine direkte Ermittlung des Grades der Filterverschmutzung. Dies wird ermöglicht, durch die Verwendung eines von den strömungsdynamischen Zusammenhängen entkoppelten, separat erzeugten akustischen Signals.

Besonders vorteilhaft stellt sich hier die Verwendung von Ultraschallsignalen dar, da einerseits aufgrund der hierbei möglichen sehr kleinbauenden akustischen Wandler eine besonders kompakte Ausführungsform entsprechender Filterverschmutzungsanzeigen möglich ist, das Signal unhörbar ist und sich damit der menschlichen Wahrnehmung als Störquelle entzieht und schließlich bei Verwendung von Ultraschallsignalen eine besondere Richtwirkung erzielbar ist, so daß sich akustische Übertragungsstrecke und Meßort eindeutig festlegen lassen.

Weitere vorteilhafte Ausgestaltungen sind in den Unteransprüchen aufgeführt.

Ausführungsbeispiele der Erfindung sind in den Zeichnungen dargestellt und werden im folgenden näher beschrieben. Es zeigen:
- Figur 1:: Eine Vorrichtung, deren Sender und Empfänger auf gegenüberliegenden Seiten des Filters/Siebes angeordnet sind, wobei die Meßstrecke rechtwinklig zur Filter/Siebfläche steht.
- Figur 2:: Eine Vorrichtung, deren Sender und Empfänger auf gegenüberliegenden Seiten des Filters/Siebes angeordnet sind, wobei die Meßstrecke schräg zur Filter/Siebfläche steht.
- Figur 3:: Eine Vorrichtung mit Sender und Empfänger auf einer Seite des Filters/Siebes und einem Schallreflektor auf der anderen Seite.
- Figur 4:: Ein Diagramm, das das Verhältnis von akustischer Dämpfung zum Ablagerungsgrad zeigt.

In der Grundausführung besteht die Erfindung aus einer akustischen Übertragungsstrecke bestehend aus einer Schallquelle als akustischem Sender 1 (z.B. in Form eines Lautsprechers) und einem akustischen Empfänger 3 (z.B. in Form eines Mikrophons). Das dazwischenliegende Medium dient als Übertragungsstrecke des vom Sender abgegebenen Signals zum Empfänger. Innerhalb dieser Übertragungsstrecke befindet sich der hinsichtlich seiner Verschmutzung zu überwachende Filter 2. Solche Filter, die insbesondere in der Lüftungstechnik beispielsweise aus Glasfasern oder Kunststoffasern bestehen, besitzen die Eigenschaft, akustische Signale bei Durchtritt in ihrer Intensität zu dämpfen. Durch Anlagerung von Partikeln, insbesondere Staub bzw. Verunreinigungen an das Filtermaterial verstärkt sich dieser dämpfende Effekt auf akustische Signale, so daß nach Auswertung des akustischen Empfangssignals auf das Maß der Filterverschmutzung bzw. Filterablagerung geschlossen werden kann.

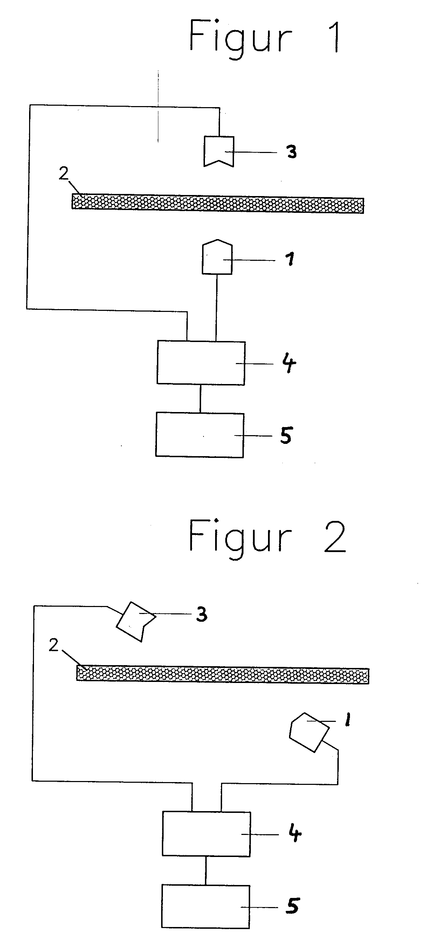

Das erste Ausführungsbeispiel der Erfindung (Figur 1) weist einen akustischen Sender 1, ein zu überwachendes Filtermedium 2, einen akustischen Empfänger 3, sowie ein Steuerteil 4 auf, das die elektrische Ansteuerung des akustischen Senders bewirkt und das Signal des akustischen Empfängers 3 verarbeitet, auswertet und beispielsweise über einen Anzeigeteil 5 dem Anlagenbetreiber darstellt bzw. einer übergeordneten Steuereinheit zur weiteren Verarbeitung übergibt.

Das zweite Ausführungsbeispiel (Figur 2) besitzt die o.g. Einrichtungen. Es zeichnet sich durch eine Schräglage der akustischen Übertragungsstrecke zum Filtermedium aus. Diese Ausführungsform empfiehlt sich insbesondere für dünnwandige Filtermedien, da auf diese Weise die Filterdurchtrittsstrecke des akustischen Signals mit zunehmender Schräglage vergrößert wird und sich somit die akustische Dämpfung erhöht. Darüberhinaus besitzt diese Anordnung den Vorteil, daß sich der Meßort der Filterverschmutzung als Schnittpunkt zwischen der akustischen Übertragungsstrecke und der Ausrichtungsebene des Filters nicht im Strömungsschatten von akustischem Sender oder Empfänger befindet, wo sich aufgrund möglicher Turbulenzen eine nicht repräsentative Verschmutzungssituation in dem vom Sender/Empfänger strömungstechnisch abgeschatteten Filterbereich einstellen könnte.

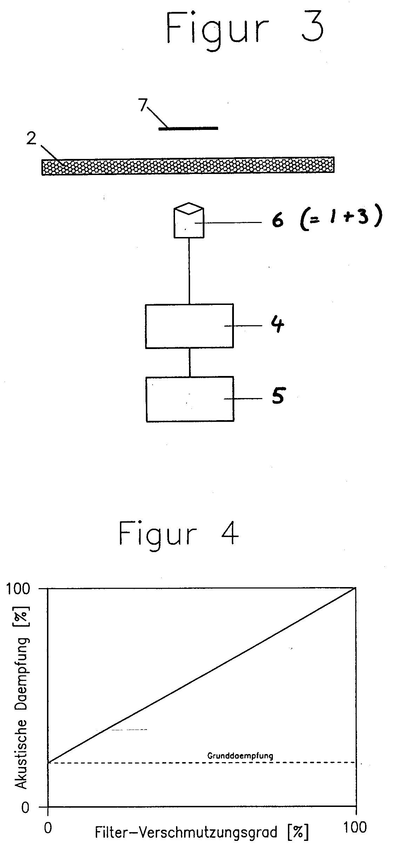

Figur 3 zeigt ein weiteres Ausführungsbeispiel der Erfindung, wobei entweder der akustische Sender und Empfänger innerhalb eines Gehäuses kombiniert sind 6 oder aber das Wandlerelement des akustischen Senders 6 selbst gleichzeitig als Empfängerelement zur Rückwandlung des an einer schallharten Oberfläche (z.B. an einer Gehäusewand) 7 reflektierten akustischen Signals dient. Hierdurch wird nicht nur eine konstruktiv besonders einfache Meßvorrichtung geschaffen, sondern der Weg durch das Filtermedium wird sogar verdoppelt, so daß die Meßgenauigkeit größer ist. Wird bei dieser Anordnung die Meßstrecke noch schräg gestellt - ähnlich Figur 2 - , so wird der Meßweg durch das Filtermedium noch weiter vergrößert.

Das Diagramm nach Figur 4 zeigt den schematischen Zusammenhang zwischen der Filterverschmutzung und der meßbaren akustischen Dämpfung. Ausgehend von der Grunddämpfung des sauberen Filtermaterials wächst bei zunehmender Filterverschmutzung die meßbare akustische Dämpfung proportional an und kann analog als Meßsignal ausgewertet werden.

In allen Ausführungsbeispielen kann statt eines Filters ein Sieb angeordnet sein.

## Patentansprüche

1. Vorrichtung zum Erfassen und Überwachen des Ablagerungsgrades von Filtern und Sieben, **dadurch gekennzeichnet,** daß sich der Filter (2) oder das Sieb incl. der Ablagerungen innerhalb einer akustischen Übertragungsstrecke, bestehend aus Schallsender (1) und Schallempfänger (3) befindet, und der Schallempfänger an eine Messeinrichtung (4) angeschlossen ist, um das Maß der Ablagerung aus der sich ergebenden akustischen Dämpfung aufgrund der sich bildenden Ablagerungen zu ermitteln.

2. Vorrichtung nach nach Anspruch 1, **dadurch gekennzeichnet,** daß der Schall im unhörbaren Ultraschall-Bereich liegt.

3. Vorrichtung nach Anspruch 1 oder 2, **dadurch gekennzeichnet,** daß die Achse des akustischen Weges zwischen Sender (1) und Empfänger (3) eine Schrägstellung gegenüber der Fläche des zu vermessenden Filters (2) bzw. Siebes aufweist.

4. Vorrichtung nach einem der vorherigen Ansprüche, **dadurch gekennzeichnet,** daß Sender (1) und Empfänger (3) in einem gemeinsamen Gehäuse (6) auf einer Seite des Filters (2) bzw. Siebes angebracht sind und hinter dem zu vermessenden Filter/Sieb eine den Schall reflektierende Fläche (7) angebracht ist.

5. Vorrichtung nach einem der vorherigen Ansprüche, **dadurch gekennzeichnet,** daß nur ein akustischer Wandler verwendet wird, der gleichzeitig akustischer Geber und akustischer Empfänger ist und hinter dem zu vermessenden Filter/Sieb eine die Schallwellen reflektierende Fläche angebracht ist.

6. Vorrichtung nach einem der vorherigen Ansprüche, **dadurch gekennzeichnet,** daß eine zusätzliche Vorrichtung zur Direktanzeige (5) des Ablagerungsgrades vorhanden ist.

7. Vorrichtung nach einem der vorherigen Ansprüche, **dadurch gekennzeichnet,** daß eine zusätzliche Vorrichtung zur Ausgabe eines dem Ablagerungsgrades entsprechenden Meßsignals vorhanden ist.

8. Vorrichtung nach einem der vorherigen Ansprüche, **dadurch gekennzeichnet,** daß eine zusätzliche Vorrichtung in Form einer Busankopplung zur Übertragung des dem Ablagerungsgrades entsprechenden Meßsignals auf digitalem Wege vorhanden ist.

9. Vorrichtung nach einem der vorherigen Ansprüche, **dadurch gekennzeichnet,** daß eine zusätzliche Schalteinrichtung vorhanden ist, die das Erreichen eines über ein Bedienelement vorwählbaren oder fest vorgegebenen Ablagerungsgrades signalisiert.

10. Vorrichtung nach einem der vorherigen Ansprüche, **dadurch gekennzeichnet,** daß eine zusätzliche Vorrichtung zur Voreinstellung der Meßeinrichtung (4) auf unterschiedliche Filter/Siebe vorhanden ist.

11. Vorrichtung nach einem der vorherigen Ansprüche, **dadurch gekennzeichnet,** daß eine zusätzliche Vorrichtung für einen Selbstabgleich der Meßvorrichtung (4) auf den Neuzustand des Filters/Siebes vorhanden ist.

12. Vorrichtung nach Anspruch 11, **dadurch gekennzeichnet,** daß der Selbstabgleich automatisch bei jedem Filter/Siebwechsel in Gang setzbar ist.

13. Vorrichtung nach einem der vorherigen Ansprüche, **dadurch gekennzeichnet,** daß die Erfassung und Überwachung des Ablagerungsgrades von Filtern und Sieben in periodischen Zeitintervallen erfolgt.
